# EUROPEAN PATENT APPLICATION

(11) **EP 2 960 160 A1**
(43) Date of publication of application: **30.12.2015**
(21) Application number: 14174686.7
(22) Date of filing: 27.06.2014
(51) Int. Cl.: B64F 5/00, B64D 41/00

(54) **Testing apparatus for a ram air turbine, a method for testing a ram air turbine and a use of a gearbox and a drive unit for testing a ram air turbine**

(71) Applicant: Airbus Operations GmbH, 21129 Hamburg (DE)
(72) Inventor: Peper, Matthias, 21614 Buxtehude (DE); Hentschel, Carsten, 21079 Hamburg (DE); Nehls, Sebastian, 22769 Hamburg (DE)
(74) Representative: Maiwald Patentanwalts GmbH

(57) **Abstract**

A testing tool for testing a ram air turbine (54) comprises a gearbox (2), a separate drive unit (58) and a removable non-rotating shaft (26). The gearbox (2) comprises an input shaft (8) and an output shaft (16), which are arranged at a distance to each other. The input shaft (8) and the output shaft (16) are mechanically coupled for transferring rotational power from the input shaft (8) to the output shaft (16). The drive unit (58) is attachable to the input shaft (8) and the output shaft (16) is attachable to a ram air turbine (54) and comprises a through-hole (24) through which the non-rotating shaft (26) is insertable. The testing tool thereby reliably prevents a non-rotating shaft (26), which is adapted for coupling with a fixed component of an anti-icing device of a ram air turbine (54), from being damaged during installation or removal of the drive unit (58).

## Description

### TECHNICAL FIELD

The invention relates to a testing apparatus for a ram air turbine, a method for testing a ram air turbine and a use of a gearbox and a drive unit for testing a ram air turbine.

### BACKGROUND OF THE INVENTION

Commercial aircraft are usually equipped with a ram air turbine, which is capable of being driven by an airflow surrounding the aircraft and of transfering rotational power to a generator or a hydraulic pump coupled with the ram air turbine as an emergency power source. Until its use, the ram air turbine is stored in a storage compartment and is only extended into the surrounding of the aircraft during an emergency case when emergency power is required.

An important process during the manufacture of an aircraft is conducting a series of functional tests of all installed systems. These also comprise testing the ram air turbine, which includes driving the ram air turbine exemplarily by a hydraulic motor and monitoring its function.

Modern ram air turbines not only include a propeller driven generator or hydraulic pump, but also an anti-icing-device, which relies on the relative rotation of two components, leading to the generation of heat through an inductive process. This principle makes use of a rotatable component and a fixed component. During testing of the ram air turbine it is to be ensured that the fixed component maintains its position, even when a part of the ram air turbine is removed for the purpose of the testing.

For testing the ram air turbine, a drive unit is to be attached to a side of the ram air turbine facing away from its propeller blades. A non-rotating shaft, which is couplable with a fixed part of the de-icing unit, is inserted into the ram air turbine, reaching through a major part of the ram air turbine and engaging with the fixed component, e.g. through a pair of hexagonally profiled components. Drive units of known testing tools have to be carefully attached to and detached from the ram air turbine for preventing canting, twisting or bending the non-rotating shaft, as it may comprise a predetermined breaking point, which may break if the bending or shearing force introduced into the shaft only temporarily exceeds a certain limit and partially remain inside the ram air turbine. A cost intensive overhaul is then necessary. Hence, it should be avoided to obliquely align the testing tool relative to the fixed shaft, as such a position supports canting the shaft. Furthermore, guiding the fixed shaft in or at a hydraulic motor for driving the ram air turbine, a leakage of hydraulic fluid may be possible, which may lead to a slight contamination of the testing area.

### SUMMARY OF THE INVENTION

It may therefore be an object of the invention to provide a testing tool for testing a ram air turbine, which is capable of reliably preventing breaking a non-rotating shaft inside the ram air turbine and, at the same time, allows a simple installation.

This object is met by a testing tool having the features of independent claim 1. Advantageous embodiments and further improvements may be gathered from the sub-claims and the following description.

A testing tool for testing a ram air turbine is proposed, which comprises a gearbox, a separate drive unit and a removable non-rotating shaft. The gearbox comprises an input shaft and an output shaft, which are arranged at a lateral distance to each other, wherein the input shaft and the output shaft are mechanically coupled for transferring rotational power from the input shaft to the output shaft, wherein the drive unit is attachable to the input shaft, wherein the output shaft is attachable to a ram air turbine and comprises a through-hole through which the non-rotating shaft is insertable.

The drive unit is an apparatus, which is adapted for providing rotational power and which may be realized through a broad variety of different motors, such as electric motors, hydraulic motors, pneumatic motors and combustion engines. Commonly, hydraulic motors are used. In the context of this invention the drive unit drives a propeller shaft of any other main mechanical component of the ram air turbine. Due to the mechanical chain between the propeller shaft and the generator and/or hydraulic pump, the function of the ram air turbine may be tested as if the ram air turbine was impinged by an air flow surrounding the aircraft.

A gist of the invention lies in providing a lateral shift between a rotational axis of a drive unit for driving the ram air turbine and a rotational axis of the ram air turbine. This allows to separate the position of the drive unit, which may be heavy and bulky, and the non-rotating shaft to be inserted into the ram air turbine. Hence, even if a person, who attaches the drive unit to the gearbox, which may already be attached to the ram air turbine, not very carefully, the danger of breaking the non-rotating shaft is eliminated.

Also, as the non-rotating shaft and the drive unit are laterally distanced, it is not required to guide the non-rotating shaft in or at the drive unit, which may be a hydraulic motor. Hence, any leakage that would conventionally arise from this may be avoided.

The functional separation and the increased simplicity of installation and removal further allows a single person to attach the gearbox to the ram air turbine, as the gearbox has a much lower weight than the drive unit and as the non-rotating shaft will be inserted after all components have already been attached. As there is no strict requirement for attaching the drive unit to the gearbox due to the lateral distance, even a single person may attach the drive unit to the gearbox. With conventional testing tools, always two persons are required to eliminate the danger of breaking the above mentioned non-rotating shaft.

The gearbox may comprise a simple design, such as an arrangement of two common gearwheels having a fixed gear ratio, which are rotatably supported in a separate housing. Also, belt or chain drives may be used for transferring rotational power from the input shaft to the output shaft. Preferably, the gear ratio is 1, which means that the input shaft and the output shaft are faced with the same rotational speeds.

The housing of the gearbox does not require any special characteristics as long as it may house the components required for transferring rotational power between the input shaft and the output shaft. For the purpose of carrying the drive unit and for attaching the gearbox to the ram air turbine it may comprise flanges. For further reducing leakage of the drive unit, in case it is a hydraulic motor, a seal may be placed between the drive unit and the gearbox.

A great advantage in the design according to these features is the fact that the non-rotating shaft may be inserted into the ram air turbine after the gearbox has been attached to the ram air turbine and, depending on the lateral distance between the input shaft and the output shaft of the gearbox, after the drive unit has been attached to the gearbox. The gearbox therefore comprises a through-hole at the output section, through which the non-rotating shaft is insertable. Consequently, through inserting the non-rotating shaft as a last component into the ram air turbine to be tested and through removal of the non-rotating shaft after the test has been accomplished as a first component, clearly eliminates all dangers for breaking the shaft.

In an advantageous embodiment, the non-rotating shaft comprises a covering component, which is designed so as to cover at least a part of fixation means arranged for fixation of the gearbox to the ram air turbine. This is conducted such that the at least a part of fixation means is removable only after removing the non-rotating shaft from the output. Hence, the covering component serves to prevent loosening these fixation means before the non-rotating shaft is removed.

In a further advantageous embodiment the covering component comprises a handle for pulling or pushing the non-rotating shaft through the through-hole of the output shaft. This simplifies the installation or removal of the non-rotating shaft. In this regard, the covering component may be an end part of the non-rotating shaft, which also serves as an end stop for the non-rotating shaft, which is designed so as to rest against a dedicated outer surface of the gearbox.

It is advantageous if the covering component comprises at least one eccentrically arranged fastening means corresponding to a fastening means of the gearbox, for preventing the rotation of the covering component, wherein the covering component is rigidly attached to the non-rotating shaft. Hence, the rotation of the non-rotating shaft is prevented through arresting the covering component to the gearbox. As the covering component should extend over the shaft in a radial direction the lever arm of the fastening means may be relatively large, which leads to a rather high achievable torque.

It is preferred that the covering component comprises at least one arm-like flat covering means, which is designed so as to cover at least one fixation means attached to the gearbox. In a particularly advantageous embodiment, the arm-like flat covering means may be rigidly attached to the non-rotating shaft and may comprise a fastening means for preventing the rotation of the covering means around a rotational axis of the non-rotating shaft.

Still further, the gearbox may comprise at least one first alignment guide, which is adapted for aligning a second alignment guide on the ram air turbine, such that the gearbox may be ideally aligned relative to the ram air turbine. For example, the first alignment guide may be a pin, while the second alignment guide may be a hole, or vice versa. It goes without saying that basically all known alignment guides may be used, even without requiring the integration of a dedicated alignment guide into the ram air turbine, i.e. using a certain existing geometric feature of the ram air turbine through a correspondingly shaped second alignment guide.

The invention also relates to a method for testing a ram air turbine, which basically comprises the steps of attaching an output of a gearbox to a ram air turbine, attaching a drive unit to an input shaft of the gearbox, inserting a non-rotating shaft into a through-hole of the output shaft and engaging the non-rotating shaft with a fixed component of an anti-icing device of the ram air turbine, driving the drive unit and monitoring the ram air turbine, removing the non-rotating shaft from the output of the gearbox, removing the drive unit from the gearbox and removing the gearbox from the ram air turbine.

The method may further comprise covering at least a part of fixation means of the gearbox through a covering means attached to the non-rotating shaft.

The invention further relates to a use of a gearbox and a drive unit for testing a ram air turbine of an aircraft, wherein the gearbox has an input shaft couplable with the drive unit and an output shaft couplable with the ram air turbine, wherein the input shaft and the output shaft are arranged at a distance from each other. As explained above, this allows a separate attachment of the drive unit and the non-rotating shaft to the ram air turbine.

### BRIEF DESCRIPTION OF THE DRAWINGS

Further characteristics, advantages and application options of the present invention are disclosed in the following description of the exemplary embodiments in the figures. All the described and/or illustrated characteristics per se and in any combination form the subject of the invention, even irrespective of their composition in the individual claims or their interrelationships. Furthermore, identical or similar components in the figures have the same reference characters.
Fig. 1 shows a sectional view of the gearbox of the testing apparatus.
Fig. 2 shows the gearbox in a three-dimensional view.
Fig. 3 shows an exploded view of the main components of the testing apparatus and a ram air turbine.

### DETAILLED DESCRIPTION OF EXEMPLARY EMBODIMENTS

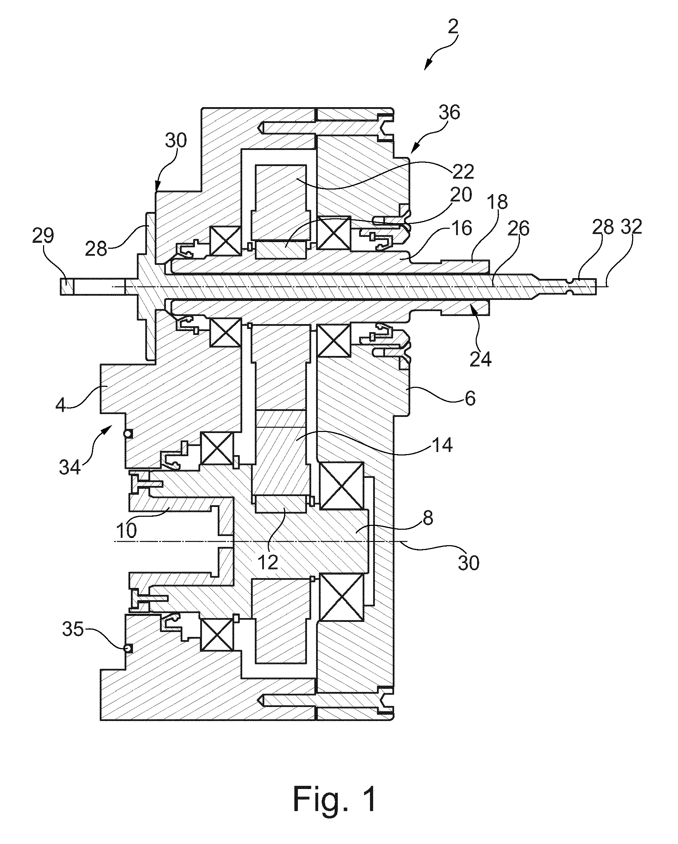

Fig. 1 shows a sectional view of a gearbox 2 of a testing apparatus for testing a ram air turbine of an aircraft. The gearbox 2 comprises a housing 4, to which a cover plate 6 is attached, such that a hollow space is defined inside the gearbox 2. In a part of this hollow space, an input shaft 8 is rotatably supported, which input shaft 8 comprises an input hub 10 for receiving a shaft of a drive unit and a feather key 12 for engaging with a first gearwheel 14 through a shaft-hub-connection. It goes without saying that every common hub design or any known positive connection may be used for coupling the shaft of the drive unit and the hub of the input shaft or any positive or non-positive connection for coupling the input shaft 8 and the first gearwheel 14. The input hub 10 faces into a direction opposite from the cover plate 6. The part around the input hub 10 may be considered the input section.

In another part, i.e. the output section, of the housing 4, an output shaft 16 is rotatably supported, which output shaft 16 comprises an output shaft end 18 reaching through the covering plate 6 and a feather key 20 for engaging with a second gearwheel 22. Regarding the possible positive or non-positive connections for connecting the second gearwheel 22 it is referred to the first gearwheel 14. In analogy, all positive connections for engaging the ram air turbine may be used on the output shaft end 18. The first gearwheel 14 and the second gearwheel are in mesh, such that driving the input hub 10 leads to rotation of shaft end 18.

The output shaft 16 is hollow and comprises a through-hole 24, through which a removable non-rotating shaft 26 extends. In Fig. 1, the shaft 26 is inserted from the input side and comprises a covering component 28, which rests at an outer surface 30 of the housing 4. Further, a handle 29 may be arranged at an outermost end of the non-rotating shaft 26 for easily pulling or pushing the non-rotating shaft 26 through the trough-hole.

The shaft 26 comprises a shaft end 18 having a certain profile, which engages with a fixed component of an anti-icing device of a ram air turbine to be tested. For example, this profile may be a hexagon, which correspondes to a hexagonal profile on the fixed component of the anti-icing device. By attaching the shaft 26 and/or the covering component 28, e.g. through eccentrically arranged fastening means or through a positive connection, in a non-rotatably manner, the fixed component of the anti-icing device is unable to rotate during the test.

A rotational axis 30, about which the first gearwheel 10 is rotatable, is located at a clear lateral distance from a second rotational axis 32, about which the output shaft 16 its rotatable. This allows to attach a drive unit to an input section of the housing 4, exemplarily into a recess 34, while the gearbox 2 may be attached to a ram air turbine to be tested with a protrusion 36 at a lateral distance from the recess 34 in the output section and facing into the opposite direction. A sealing element 35 may additionally be positioned between the drive unit and the recess 34.

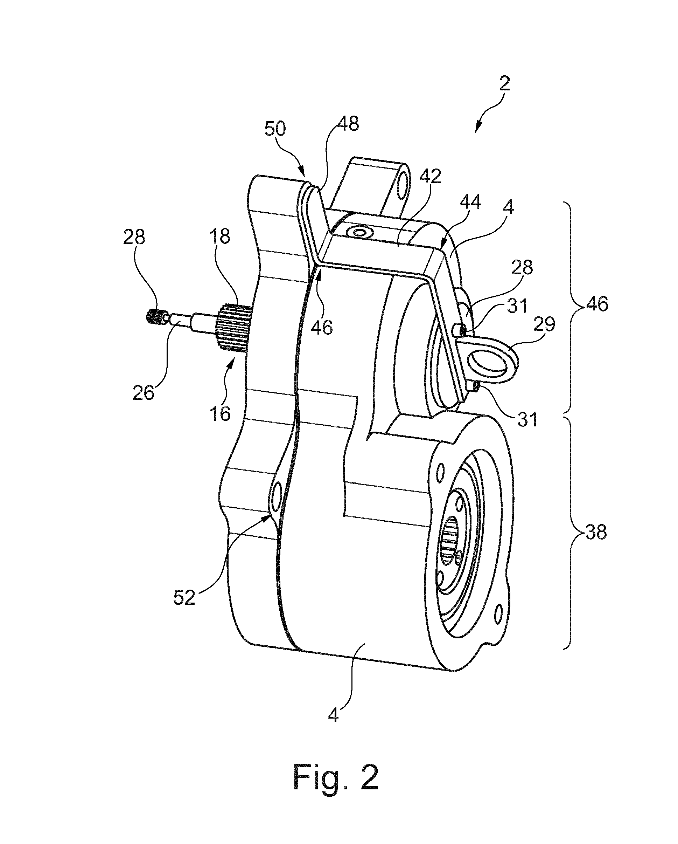

In Fig. 2, a three-dimensional overview of the gearbox 2 is shown. Here, an input section 38 comprises a partially cylindrical part of housing 4, which is laterally distanced from an output section 40, which is a partially cylindrical part of housing 4. On the left side of the drawing, the shaft end 18 of the output shaft 16 is visible, through which the non-rotating shaft 26 and its shaft end 18 extend.

The non-rotating shaft 26 is fully inserted into the gearbox 2 and the covering component 28, which is e.g. rigidly attached to the non-rotating shaft 26, rests against housing 4. Bolts 31, which reach through the covering component 28 into the gearbox 2, prevent the non-rotating shaft 26 from rotation.

The covering component 28 comprises an arm-like covering element 42, which comprises two folds 44 and 46 as well as an end section 48, which rests on a fixation means 50, which supports the fixation of gearbox 2 to a ram air turbine. However, fixation means 52 at an input region 38 remain unblocked. This has the great advantage that it is only possible to remove the upper fixation means 50 in the output region when the shaft 26 is removed from the apparatus 2. Hence, canting the shaft 26, which may happen when the gearbox 2 is only attached through lower fixation means 50 to the ram air turbine, can be prevented.

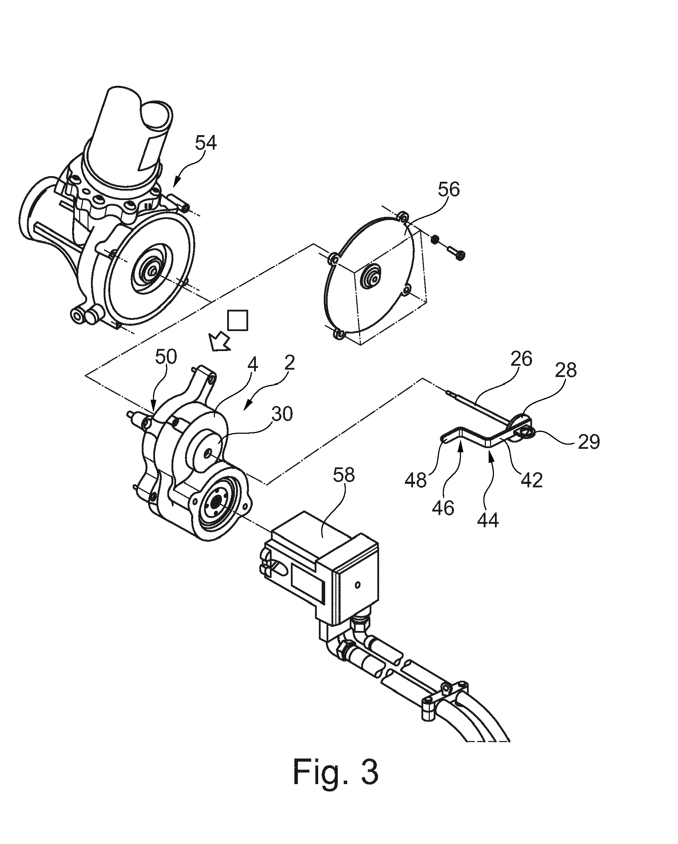

Finally, Fig. 3 shows an overview of all components for testing a ram air turbine 54. A cover 56 of the ram air turbine 54 may be removed, after which the gearbox 2 is attached to the ram air turbine 54, such that a shaft attached to a propeller of the ram air turbine 54 is driven through the shaft end 18 of the output shaft 16. After completely attaching the gearbox 2 to the ram air turbine 54, the non-rotating shaft 26 is inserted into the through-hole 24 of the output shaft 16, such that the covering component 28 rests against a surface 30 of housing 4 and such that at least one fixation means 50 in the output section 40 is blocked. Afterwards, a drive unit 58 may be attached to the input section 38 for finally driving the input shaft 8 and the output shaft 16.

It is only possible to remove the apparatus 2 from the ram air turbine 54 when the shaft 26 is removed again in order to reach the fixation means 50.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. A testing tool for testing a ram air turbine (54), comprising
- a gearbox (2),
- a separate drive unit (58) and
- a removable non-rotating shaft (26),
wherein the gearbox (2) comprises an input shaft (8) and an output shaft (16), which are arranged at a distance to each other, wherein the input shaft (8) and the output shaft (16) are coupled for transferring rotational power from the input shaft (8) to the output shaft (16),
wherein the drive unit (58) is attachable to the input shaft (8),
wherein the output shaft (16) is attachable to a ram air turbine (54) and comprises a through-hole (24) through which the non-rotating shaft (26) is insertable.

2. The testing tool of claim 1,
wherein the non-rotating shaft (26) comprises a covering component (28), which is designed so as to cover at least a part of fixation means (50) arranged for attaching the gearbox (2) to the ram air turbine (54) such that the at least a part of fixation means (50) is accessible only after removing the non-rotating shaft (26).

3. The testing tool of claim 2,
wherein the covering component (28) comprises a handle for pulling or pushing the non-rotating shaft (26) through the through-hole (24) of the output shaft (16).

4. The testing tool of any of the previous claims,
wherein the covering component (28) comprises at least one arm-like flat covering element (42), which is designed so as to cover at least one fixation means (50) attached to the gearbox (2).

5. The testing tool of any of the previous claims,
wherein the gearbox (2) comprises at least one first alignment guide, which is adapted for aligning a second alignment guide on the ram air turbine (54), such that the gearbox (2) is precisely alignable relative to the ram air turbine (54).

6. The testing tool of any of the previous claims,
wherein the distance between the input shaft (8) and the output shaft (16) of the gearbox (2) allows to insert or remove the non-rotating shaft (26) into the through-hole (24) of the output shaft (16) with the drive unit (54) attached to the gearbox (2).

7. Method for testing a ram air turbine (54), comprising the steps of:
- attaching an output shaft (16) of a gearbox (2) to a ram air turbine (54),
- attaching a drive unit (58) to an input shaft (8) of the gearbox (2),
- inserting a non-rotating shaft (26) into a through-hole (24) of the output shaft (16) and engaging the non-rotating shaft (26) with a fixed component of an anti-icing device of the ram air turbine (54),
- driving the drive unit (58) and monitoring the ram air turbine (54),
- removing the non-rotating shaft (26) from the output shaft (16) of the gearbox (2),
- removing the drive unit (58) from the gearbox (2) and
- removing the gearbox (2) from the ram air turbine (54).

8. The method of claim 7,
further comprising covering at least a part of fixation means (50) of the gearbox (2) through a covering component (28) attached to the non-rotating shaft (26).

9. Use of a gearbox (2) and a drive unit (58) for testing a ram air turbine (54) of an aircraft,
wherein the gearbox (2) has an input shaft (8) couplable with the drive unit (58) and an output shaft (16) couplable with the ram air turbine (54) and
wherein the input shaft (8) and the output shaft (16) are mechanically coupled and arranged at a distance from each other.
